# FASCICULE DE BREVET EUROPEEN

(11) **EP 0 418 120 B1**
(45) Date de publication et mention de la délivrance du brevet: **27.04.1994**
(21) Numéro de dépôt: 90402432.0
(22) Date de dépôt: 04.09.1990
(51) Int. Cl.: G02C 5/14

(54) **Branche de monture de lunettes à corps de branche interchangeable**
Brillenbügel mit auswechselbarem Bügelkörper
Spectacle frame leg with interchangeable leg body

(30) Priorité: 07.09.1989 FR 8911701
(43) Date de publication de la demande: 20.03.1991
(73) Titulaire: ESSILOR INTERNATIONAL, Compagnie Générale d'Optique, F-94000 Créteil (FR)
(72) Inventeur: Monin, Jean Marc, F-77430 Pontault-Combault (FR)
(74) Mandataire: CABINET BONNET-THIRION

(56) Documents cités:
- EP-A- 0 115 826
- FR-A- 2 384 275
- FR-A- 2 398 322
- FR-A- 2 485 755
- FR-A- 2 543 312
- FR-E- 87 310
- US-A- 4 488 792
- US-A- 4 564 272

## Description

L'invention se rapporte à une branche de monture de lunettes et concerne plus particulièrement un perfectionnement permettant de rendre le corps de branche interchangeable.

On connaît des montures de lunettes dont les branches sont conçues pour permettre un échange facile des corps de branches. A titre d'exemple, on peut citer la branche de monture de lunettes décrite dans le brevet français N° 2 543 312 qui comprend un agencement assurant simultanément la fixation mutuelle de la partie de charnière de la branche, d'un manchon de montage et du corps de branche proprement dit. Cependant, l'assemblage se fait au moyen d'une vis latérale qui reste apparente, ce qui nuit à l'esthétique de la monture. De plus, la vis peut se dévisser, ce qui entraîne du jeu dans l'assemblage voire la perte de la vis elle-même, celle-ci n'étant pas retenue.

L'invention propose un nouvel agencement permettant de résoudre tous ces problèmes.

Dans cet esprit, l'invention concerne donc une branche de monture de lunettes à corps de branche interchangeable comprenant un tel corps de branche, un élément intermédiaire sur lequel se monte ledit corps de branche et comportant un premier charnon, un second charnon étant solidaire d'une monture ou d'un élément de celle-ci, caractérisée en ce que ledit élément intermédiaire comporte un organe mâle, allongé sensiblement dans le sens dudit corps de branche et muni d'un conduit le traversant longitudinalement, en ce qu'une vis est engagée dans ce conduit qui est muni d'un épaulement ou moyen d'appui analogue et en ce que ledit corps de branche comporte, à une extrémité, un évidement de forme et dimensions correspondant à celles dudit organe mâle et prolongé par un trou de fixation, aligné après montage avec ledit conduit de l'élément intermédiaire, ce trou de fixation recevant ladite vis.

L'invention sera mieux comprise et d'autres avantages de celle-ci apparaîtront plus clairement à la lumière de la description qui va suivre d'une branche de monture de lunettes conforme à son principe, donnée uniquement à titre d'exemple et faite en référence aux dessins annexés dans lesquels:
- la figure 1 est une vue en perspective éclatée des différentes parties constitutives d'une branche de monture de lunettes conforme à l'invention ;
- la figure 2 est une vue partielle de dessus de l'élément intermédiaire comportant le premier charnon ; et
- les figures 3 à 5 illustrent le montage d'un corps de branche sur cet élément intermédiaire.

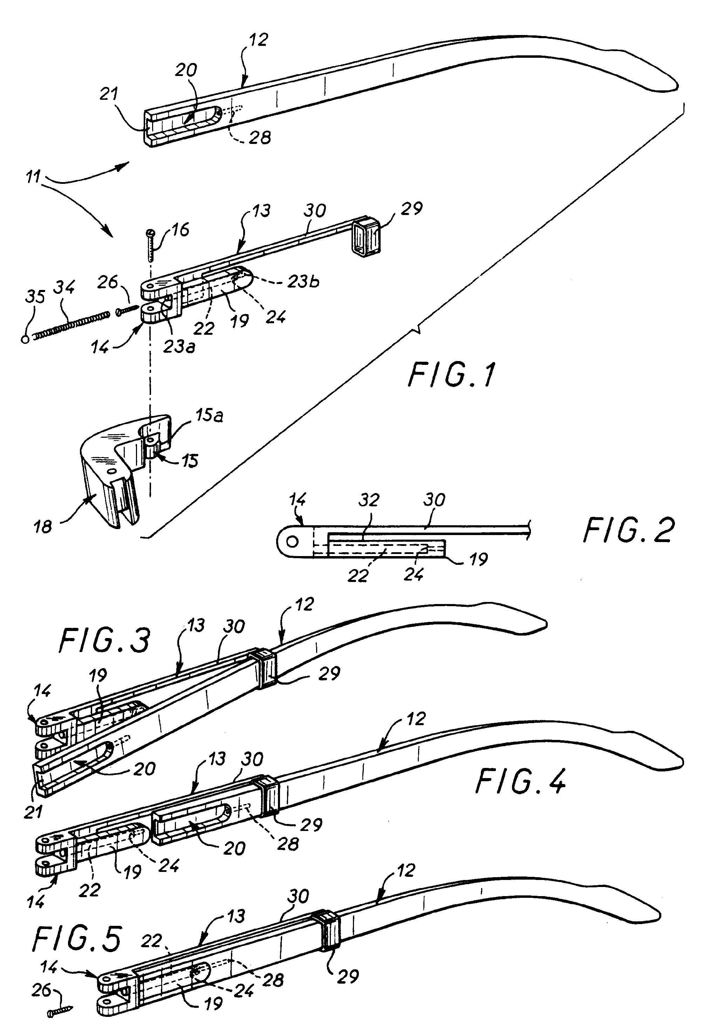

En se reportant plus particulièrement à la figure 1, on a représenté une branche de monture de lunettes 11 comportant un corps de branche 12 interchangeable et un élément intermédiaire 13 sur lequel est défini un premier charnon 14 formant ici une petite chape. Un second charnon 15, simple, conformé et dimensionné pour venir s'articuler à la chape dudit premier charnon 14 par la mise en place d'une vis 16 définissant l'axe de pivotement, est défini dans un élément 18 fixé à la monture (non représentée) ou faisant partie de celle-ci.

Selon une caractéristique importante de l'invention, l'élément intermédiaire 13 comporte un organe mâle 19 allongé sensiblement dans la direction de la branche, tandis que le corps de branche 12 comporte à son extrémité de montage un évidement 20 de forme et dimensions correspondant à celles de l'organe mâle. Par évidement, on entend aussi bien une mortaise, dans laquelle vient s'emboîter l'organe mâle 19, qu'un évidement 20 pratiqué latéralement et laissant subsister un voile 21 sur le côté extérieur du corps de branche, cette dernière réalisation étant celle représentée. Dans l'exemple représenté, l'organe mâle a une section rectangulaire avec une extrémité arrondie mais on pourrait imaginer d'autres formes, notamment avec des nervures en queue d'aronde ou analogues. L'organe mâle 19 s'étend à partir du premier charnon et est muni d'un perçage ou conduit interne 22 le traversant longitudinalement de part en part. L'orifice 23a du conduit 22 situé du côté du charnon 14 est donc masqué, après montage, par la charnière de la branche. Plus précisément, le conduit 22 se prolonge dans le charnon 14 de façon que cet orifice 23a débouche au fond de la chape dudit premier charnon. L'autre orifice 23b débouche au milieu de l'extrémité arrondie de l'organe mâle 19. Un épaulement 24 ou analogue est prévu dans le conduit 22, non loin de l'orifice 23b pour qu'une vis 26 puisse prendre appui à l'intérieur de ce conduit.

Par ailleurs, un trou de fixation 28, éventuellement taraudé, adapté à recevoir l'extrémité de la vis 26, est pratiqué dans le corps de branche 12 dans le prolongement du conduit 22, après montage Plus précisément, ce trou de fixation 28, borgne, débouche dans la partie d'extrémité arrondie de la paroi latérale de l'évidement 20.

Outre le premier charnon 14, l'élément intermédiaire 13 comporte une bague de maintien 29, à ouverture rectangulaire, éloignée du charnon 14 et traversée par le corps de branche (figure 5). Cette bague est reliée au charnon par un élément latéral de retenue 30 en contact, après montage, avec la face externe du corps de branche 12. La bague 29 est soudée à l'extrémité de l'élément 30 tandis que l'organe mâle 19 est rapporté (par exemple soudé par son extrémité correspondante) sur l'élément intermédiaire, à l'arrière dudit premier charnon, de façon qu'un espace 32 subsiste entre ledit organe mâle 19 et l'élément latéral de retenue 30, pour permettre l'insertion de la partie terminale du corps de branche, (en l'occurrence une partie du voile 21) dans cet espace. Ce montage améliore la précision et la robustesse de l'assemblage.

Le montage du corps de branche 12 sur l'élément intermédiaire 13 s'effectue par une succession d'opérations simples illustrées aux figures 3 à 5, consistant, de préférence, à introduire d'abord le corps de branche 12 dans la bague 29 puis à faire glisser l'extrémité du corps de branche parallèlement à l'élément intermediaire de façon que l'organe mâle de ce dernier prenne place dans l'évidement 20.

L'assemblage est achevé avec la mise en place de la vis 26.

Revenant à la figure 1, il est à noter que le second charnon 15 qui vient se positionner dans la chape du premier charnon 14 est conformé latéralement de façon à définir une came 15a. Le conduit 22 abrite en outre un agencement de sollicitation élastique constitué ici par un ressort 34 et une bille 35. De cette façon, lorsque les éléments de la charnière sont assemblés au moyen de la vis 16, la bille 35 est repoussée contre la came constituée par la surface latérale du second charnon 15. Le profil latéral de cette came est dessiné pour définir une position stable de la branche. Cet agencement est connu en soi mais il est à noter qu'il est réalisé ici de façon particulièrement simple et avantageuse puisqu'il utilise le conduit 22 abritant la vis 26. En outre, le fait que le ressort 34 prenne appui sur la tête de la vis 26, réduit les risques de dévissage de cette dernière.

## Revendications

1. Branche de monture de lunettes à corps de branche interchangeable comprenant un tel corps de branche (12), un élément intermédiaire (13) sur lequel se monte ledit corps de branche et comportant un premier charnon (14), un second charnon (15) étant solidaire d'une monture ou d'un élément (18) de celle-ci, caractérisée en ce que ledit élément intermédiaire comporte un organe mâle (19), allongé sensiblement dans le sens dudit corps de branche et muni d'un conduit (22) le traversant longitudinalement, en ce qu'une vis (26) est engagée dans ce conduit qui est muni d'un épaulement (24) ou moyen d'appui analogue et en ce que ledit corps de branche comporte, à une extrémité, un évidement (20) de forme et dimensions correspondant à celles dudit organe mâle et prolongé par un trou de fixation (28), aligné après montage avec ledit conduit de l'élément intermédiaire, ce trou de fixation recevant ladite vis.

2. Branche de monture de lunettes selon la revendication 1, caractérisée en ce que ledit organe mâle (19) s'étend à partir dudit premier charnon (14) de façon que l'orifice (23a) correspondant du conduit soit masqué par la charnière**,** comprenant après montage lesdits premier et second charnons, de ladite branche.

3. Branche de monture de lunettes selon la revendication 2, caractérisée en ce que ledit premier charnon (14) définit au moins une chape d'articulation et que l'orifice (23a) correspondant dudit conduit débouche au fond de cette chape

4. Branche de monture de lunettes selon la revendication 3, caractérisée en ce que ledit second charnon (15) qui vient se positionner dans ladite chape dudit premier charnon (14) est conformé latéralement de façon à définir une came et en ce que ledit conduit (22) abrite en outre un agencement de sollicitation élastique (34, 35), coopérant avec ladite came pour définir une position stable de ladite branche.

5. Branche de monture de lunettes selon la revendication 4, caractérisée en ce que ledit élément intermédiaire (13) comporte une bague de maintien (29) éloignée dudit premier charnon et traversée par ledit corps de branche.

6. Branche de monture de lunettes selon la revendication 5, caractérisée en ce que ledit premier charnon (14) et ladite bague de maintien (29) sont reliés par un élément latéral de retenue (30) en contact avec ledit corps de branche.

7. Branche de monture de lunettes selon la revendication 6, caractérisée en ce que ledit organe mâle (19) est rapporté, par exemple soudé, sur ledit élément intermédiaire de façon qu un espace (32) subsiste entre lui et l'élément latéral de retenue, pour permettre l'insertion de la partie terminale du corps de branche.

## Patentansprüche

1. Brillenbügel mit auswechselbarem Bügelkörper, mit einem solchen Bügelkörper (12), einem mittleren Element (13), auf dem der Bügelkörper angebracht ist und mit einem ersten Verbindungsteil (14), wobei ein zweites Verbindungsteil (15) einstückig ist mit einer Fassung oder einem Element (18) dessen, **dadurch gekennzeichnet,** daß das mittlere Element ein männliches Organ (19) aufweist, das praktisch in der Richtung des Bügelkörpers verlängert und mit einem Kanal (22) versehen ist, der es in Längsrichtung schneidet, daß eine Schraube (26) in dem Kanal in Eingriff ist, der versehen ist mit einer Schulter (24) oder einem ähnlichen Anlagemittel, und daß der Bügelkörper an seinem Ende eine Aussparung (20) aufweist, deren Form und Abmessungen denen des männlichen Organes entsprechen und die durch eine Befestigungsbohrung (28) verlängert ist, ausgerichtet nach der Montage mit dem Kanal des mittleren Elementes, wobei die Befestigungsbohrung die Schraube aufnimmt.

2. Brillenbügel nach Anspruch 1, **dadurch gekennzeichnet,** daß das männliche Organ (19) sich ausgehend von dem ersten Verbindungsteil (14) derart erstreckt, daß die Öffnung (23a) entsprechend dem Kanal durch das Verbindungsstück verdeckt ist, welches nach der Montage das erste und zweite Verbindungsteil des Bügels aufweist.

3. Brillenbügel nach Anspruch 2, **dadurch gekennzeichnet,** daß das erste Verbindungsteil (14) wenigstens ein Schwenkgelenk definiert und daß die Öffnung (23a) entsprechend dem Kanal am Boden des Gelenkes mündet bzw. sich öffnet.

4. Brillenbügel nach Anspruch 3, **dadurch gekennzeichnet,** daß das zweite Verbindungsteil (15), das sich in dem Gelenk des ersten Verbindungsteiles (14) positionieren läßt, lateral angepaßt ist derart, daß es einen Nocken definiert, und daß der Kanal (22) ferner einen Aufbau von elastischer Vorspannung (34, 35) aufweist, der zusammenwirkt mit dem Nocken, um eine stabile Position des Bügels zu definieren.

5. Brillenbügel nach Anspruch 4, **dadurch gekennzeichnet,** daß das mittlere Element (13) einen Haltering (29) aufweist, der entfernt ist von dem ersten Verbindungsteil und durchsetzt wird von dem Bügelkörper.

6. Brillenbügel nach Anspruch 6, **dadurch gekennzeichnet,** daß das erste Verbindungsstück (14) und der Haltering (29) verbunden sind durch ein laterales Halteelement (30) in Kontakt mit dem Bügelkörper.

7. Brillenbügel nach Anspruch 6, **dadurch gekennzeichnet,** daß das männliche Organ (19) angesetzt ist, beispielsweise geschweißt, an dem mittleren Element derart, daß ein Raum (32) verbleibt zwischen ihm und dem lateralen Halteelement, um den Einsatz des Endabschnittes des Bügelkörpers zu ermöglichen.

## Claims

1. A spectacles frame sidepiece having an interchangeable sidepiece body, comprising such a sidepiece body (12), an intermediate element (13) on which said sidepiece body is mounted and comprising a first hinge portion (14), a second hinge portion (15) being fixed with respect to a frame or an element (18) thereof, characterised in that said intermediate element comprises a male member (19) which is elongate substantially in the direction of said sidepiece body and provided with a passage (22) extending longitudinally through it, that a screw (26) is engaged into said passage which is provided with a shoulder (24) or like support means, and that at one end said sidepiece body comprises a recess (20) of shape and dimensions corresponding to those of said male member and prolonged by a fixing hole (28) which after assembly is aligned with said passage in the intermediate element, said fixing hole receiving said screw.

2. A spectacles frame sidepiece according to claim 1 characterised in that said male member (19) extends from said first hinge portion (14) in such a way that the corresponding opening (23a) of the passage is masked by the hinge of said sidepiece, said hinge comprising after assembly said first and second hinge portions.

3. A spectacles frame sidepiece according to claim 2 characterised in that said first hinge portion (14) defines at least one pivotal mounting fork and that the corresponding opening (23a) of said passage opens at the bottom of said fork.

4. A spectacles frame sidepiece according to claim 3 characterised in that said second hinge portion (15) which comes to be positioned in said fork of said first hinge portion (14) is shaped laterally in such a way as to define a cam and that said passage (22) further accommodates a resilient biasing means (34, 35) co-operating with said cam to define a stable position of said sidepiece.

5. A spectacles frame sidepiece according to claim 4 characterised in that said intermediate element (13) comprises a holding ring (29) which is spaced from said first hinge portion and through which said sidepiece body passes.

6. A spectacles frame sidepiece according to claim 5 characterised in that said first hinge portion (14) and said holding ring (29) are connected by a lateral retaining element (30) in contact with said sidepiece body.

7. A spectacles frame sidepiece according to claim 6 characterised in that said male member (19) is fitted, for example welded, to said intermediate element in such a way that there is a space (32) between it and the lateral retaining element to permit insertion of the terminal portion of the sidepiece body.
